(19) Europäisches Patentamt
European Patent Office
Office européen des brevets

(11) **EP 2 891 096 B1**

(12) **EUROPEAN PATENT SPECIFICATION**

(45) Date of publication and mention
of the grant of the patent:
**21.09.2016 Bulletin 2016/38**

(51) Int Cl.:
***G06F 19/00*** (2011.01)      ***G06F 17/50*** (2006.01)
***G01V 99/00*** (2009.01)      ***G01V 11/00*** (2006.01)

(21) Application number: **13833367.9**

(22) Date of filing: **28.08.2013**

(86) International application number:
**PCT/US2013/056926**

(87) International publication number:
**WO 2014/036045 (06.03.2014 Gazette 2014/10)**

(54) **UNDISTURBED FRACTURE ORIENTATION**

UNGESTÖRTE BRUCHORIENTIERUNG

ORIENTATION D'UNE FRACTURE NON PERTURBÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2012 US 201261694943 P**
**27.08.2013 US 201314011329**

(43) Date of publication of application:
**08.07.2015 Bulletin 2015/28**

(73) Proprietors:
• **Services Pétroliers Schlumberger**
**75007 Paris (FR)**
Designated Contracting States:
**FR**
• **Schlumberger Holdings Limited**
**Road Town, Tortola 1110 (VG)**
Designated Contracting States:
**GB NL**
• **Schlumberger Technology B.V.**
**2514 JG The Hague (NL)**
Designated Contracting States:
**AL AT BE BG CH CY CZ DE DK EE ES FI GR HR HU IE IS IT LI LT LU LV MC MK MT NO PL PT RO RS SE SI SK SM TR**

(72) Inventors:
• **MAERTEN, Frantz**
**F-34570 Pignan (FR)**
• **MAERTEN, Laurent**
**F-34830 Clapiers (FR)**
• **LEJRI, Mostfa**
**F-34090 Montpellier (FR)**

(74) Representative: **Schlumberger Cambridge Research Limited**
**Intellectual Property Law**
**High Cross**
**Madingley Road**
**Cambridge CB3 0EL (GB)**

(56) References cited:
**JP-A- H09 127 255      US-A1- 2005 015 226**
**US-A1- 2009 192 714      US-A1- 2010 307 755**
**US-A1- 2011 042 080      US-A1- 2012 029 895**
**US-A1- 2012 072 188      US-A1- 2012 072 188**

• **Frantz Maerten: "Geomechanics to solve geological structure issues: forward, inverse and restoration modeling", THESE pour obtenir le grade de DOCTEUR DE L'UNIVERSITE MONTPELLIER II Discipline : Structure et evolution de la lithosphere Ecole doctorale : SIBAGHE, 17 June 2010 (2010-06-17), pages 1-457, XP055159680, Retrieved from the Internet: URL:https://hal.archives-ouvertes.fr/file/ index/docid/537899/filename/thesemaerten.p df [retrieved on 2014-12-19]**
• **L Macé ET AL: "Integration of Fracture Data into 3D Geomechanical Modeling to Enhance Fractured Reservoirs Characterization", SPE 2005 conference, 1 October 2005 (2005-10-01), XP055216435, Retrieved from the Internet: URL:https://www.onepetro.org/download/conf erence-paper/SPE-95827-MS?id=conference-pa per/SPE-95827-MS [retrieved on 2015-09-28]**

## EP 2 891 096 B1

**Description**

BACKGROUND

Fractures may exist in a geologic environment. Such fractures may be observed in the present-day. Stress (e.g., past or present tectonic regimes) that may have given rise to such fractures may be of interest. Various technologies and techniques described herein pertain to processing of data, for example, to analyze fractures based at least in part on stress.

Such techniques are e.g. disclosed in the document "Geomechanics to solve geological structure issues: forward, inverse and restoration modeling" by Frantz Maerten (Université Montpellier II Sciences et techniques du Languedoc, 17.06.2010).

SUMMARY

A method can include providing fault geometry data and fracture data for a fracture; estimating a parameter value of a far field stress based at least in part on the fault geometry data and the fracture data; and determining an undisturbed parameter value for the fracture. A system can include a processor; memory operatively coupled to the processor; and one or more modules that include processor-executable instructions stored in the memory to instruct the system to provide fault geometry data and fracture data for a fracture; estimate a parameter value of a far field stress based at least in part on the fault geometry data and the fracture data; and determine an undisturbed parameter value for the fracture. One or more computer-readable storage media can include computer-executable instructions to instruct a computing system to: provide fault geometry data and fracture data for a fracture; estimate a parameter value of a far field stress based at least in part on the fault geometry data and the fracture data; and determine an undisturbed parameter value for the fracture. Various other apparatuses, systems, methods, etc., are also disclosed.

This summary is provided to introduce a selection of concepts that are further described below in the detailed description. This summary is not intended to identify key or essential features of the claimed subject matter, nor is it intended to be used as an aid in limiting the scope of the claimed subject matter.

BRIEF DESCRIPTION OF THE DRAWINGS

Features and advantages of the described implementations can be more readily understood by reference to the following description taken in conjunction with the accompanying drawings.

Fig. 1 illustrates an example system that includes various components for modeling a geologic environment and various equipment associated with the geologic environment;

Fig. 2 illustrates an example of a sedimentary basin, an example of a method, an example of a formation, an example of a borehole, an example of a convention and an example of a system;

Fig. 3 illustrates an example of a tectonic regime;

Fig. 4 illustrates examples of fractures;

Fig. 5 illustrates an example of a method;

Fig. 6 illustrates an example of an environment and an example of a method;

Fig. 7 illustrates examples of rose diagrams of information associated with the environment of Fig. 6 associated with the method of Fig. 6;

Fig. 8 illustrates examples of rose diagrams corresponding to an example of a method involving multiple events;

Fig. 9 illustrates an example of a system and examples of workflows; and

Fig. 10 illustrates example components of a system and a networked system.

DETAILED DESCRIPTION

This description is not to be taken in a limiting sense, but rather is made merely for the purpose of describing the general principles of the implementations. The scope of the described implementations should be ascertained with reference to the issued claims.

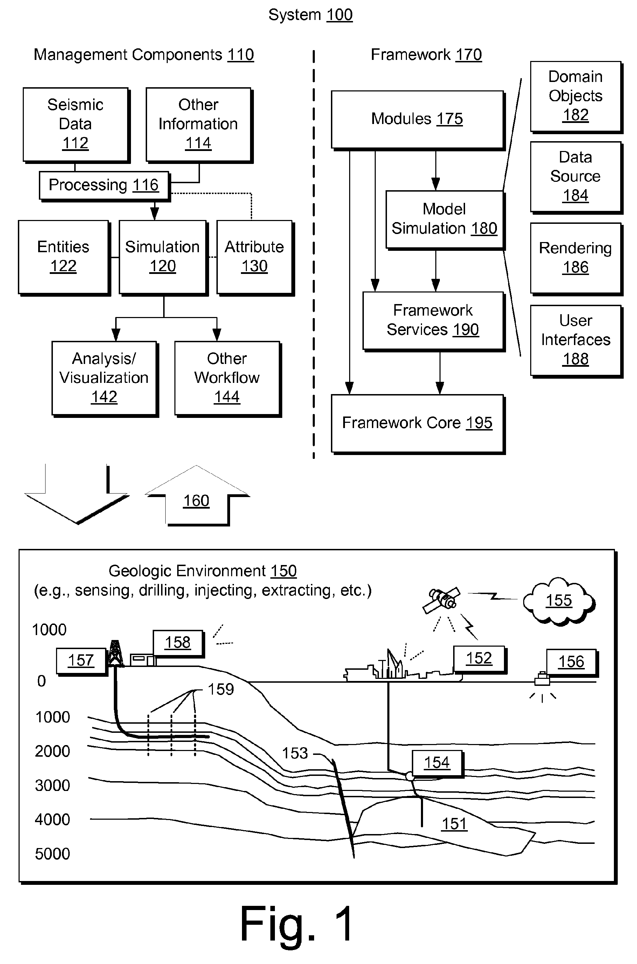

Fig. 1 shows an example of a system 100 that includes various management components 110 to manage various aspects of a geologic environment 150 (e.g., an environment that includes a sedimentary basin, a reservoir 151, one or more fractures 153, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

2

In the example of Fig. 1, the management components 110 include a seismic data component 112, an additional information component 114 (e.g., well/logging data), a processing component 116, a simulation component 120, an attribute component 130, an analysis/visualization component 142 and a workflow component 144. In operation, seismic data and other information provided per the components 112 and 114 may be input to the simulation component 120.

In an example embodiment, the simulation component 120 may rely on entities 122. Entities 122 may include earth entities or geological objects such as wells, surfaces, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114). An entity may be characterized by one or more properties (e.g., a geometrical pillar grid entity of an earth model may be characterized by a porosity property). Such properties may represent one or more measurements (e.g., acquired data), calculations, etc.

In an example embodiment, the simulation component 120 may operate in conjunction with a software framework such as an object-based framework. In such a framework, entities may include entities based on pre-defined classes to facilitate modeling and simulation. A commercially available example of an object-based framework is the MICROSOFT® .NET™ framework (Redmond, Washington), which provides a set of extensible object classes. In the .NET™ framework, an object class encapsulates a module of reusable code and associated data structures. Object classes can be used to instantiate object instances for use in by a program, script, etc. For example, borehole classes may define objects for representing boreholes based on well data.

In the example of Fig. 1, the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of Fig. 1, the analysis/visualization component 142 may allow for interaction with a model or model-based results (e.g., simulation results, etc.). As an example, output from the simulation component 120 may be input to one or more other workflows, as indicated by a workflow component 144.

As an example, the simulation component 120 may include one or more features of a simulator such as the ECLIPSE™ reservoir simulator (Schlumberger Limited, Houston Texas), the INTERSECT™ reservoir simulator (Schlumberger Limited, Houston Texas), etc. As an example, a reservoir or reservoirs may be simulated with respect to one or more enhanced recovery techniques (e.g., consider a thermal process such as SAGD, etc.).

In an example embodiment, the management components 110 may include features of a commercially available framework such as the PETREL® seismic to simulation software framework (Schlumberger Limited, Houston, Texas). The PETREL® framework provides components that allow for optimization of exploration and development operations. The PETREL® framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of modeling, simulating, etc.).

In an example embodiment, various aspects of the management components 110 may include add-ons or plug-ins that operate according to specifications of a framework environment. For example, a commercially available framework environment marketed as the OCEAN® framework environment (Schlumberger Limited, Houston, Texas) allows for integration of add-ons (or plug-ins) into a PETREL® framework workflow. The OCEAN® framework environment leverages .NET® tools (Microsoft Corporation, Redmond, Washington) and offers stable, user-friendly interfaces for efficient development. In an example embodiment, various components may be implemented as add-ons (or plug-ins) that conform to and operate according to specifications of a framework environment (e.g., according to application programming interface (API) specifications, etc.).

Fig. 1 also shows an example of a framework 170 that includes a model simulation layer 180 along with a framework services layer 190, a framework core layer 195 and a modules layer 175. The framework 170 may include the commercially available OCEAN® framework where the model simulation layer 180 is the commercially available PETREL® model-centric software package that hosts OCEAN® framework applications. In an example embodiment, the PETREL® software may be considered a data-driven application. The PETREL® software can include a framework for model building and visualization. Such a model may include one or more grids.

The model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

In the example of Fig. 1, the domain objects 182 can include entity objects, property objects and optionally other objects. Entity objects may be used to geometrically represent wells, surfaces, reservoirs, etc., while property objects may be used to provide property values as well as data versions and display parameters. For example, an entity object may represent a well where a property object provides log information as well as version information and display information (e.g., to display the well as part of a model).

In the example of Fig. 1, data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of Fig. 1, the geologic environment 150 may include layers (e.g., stratification) that include a reservoir 151 and that may be intersected by a fault 153. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, Fig. 1 shows a satellite in communication with the network 155 that may be configured for communications, noting that the satellite may additionally or alternatively include circuitry for imagery (e.g., spatial, spectral, temporal, radiometric, etc.).

Fig. 1 also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL® software, for example, that operates on seismic data, seismic attribute(s), etc. As an example, a workflow may be a process implementable in the OCEAN® framework. As an example, a workflow may include one or more worksteps that access a module such as a plug-in (e.g., external executable code, etc.).

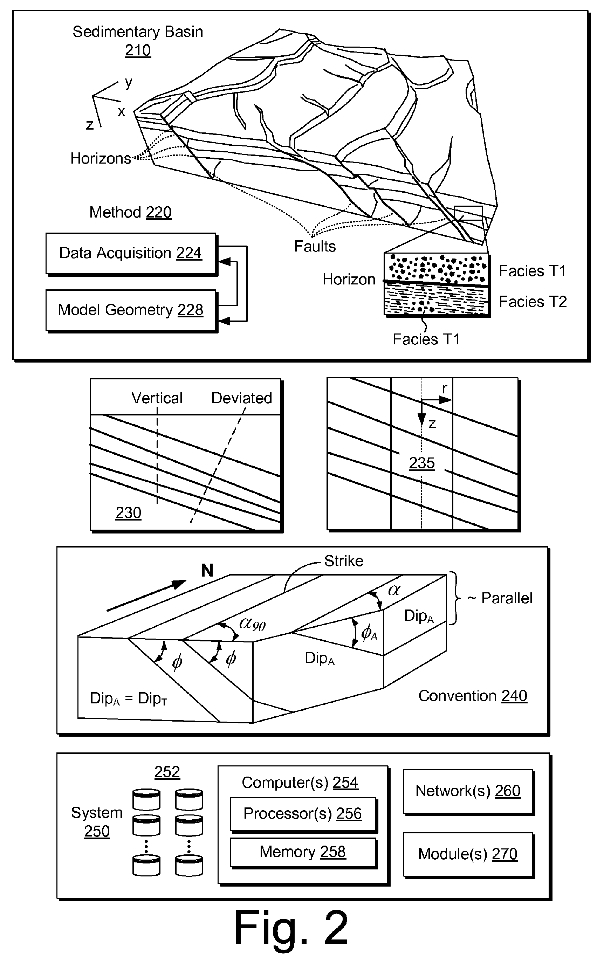

Fig. 2 shows an example of a sedimentary basin 210, an example of a method 220 for model building (e.g., for a simulator, etc.), an example of a formation 230, an example of a borehole 235 in a formation, an example of a convention 240 and an example of a system 250.

As an example, reservoir simulation, petroleum systems modeling, etc. may be applied to characterize various types of subsurface environments, including environments such as those of Fig. 1.

In Fig. 2, the sedimentary basin 210, which is a geologic environment, includes horizons, faults and facies formed over some period of geologic time. These features are distributed in two or three dimensions in space, for example, with respect to a Cartesian coordinate system (e.g., x, y and z) or other coordinate system (e.g., cylindrical, spherical, etc.). As shown, the model building method 220 includes a data acquisition block 224 and a model geometry block 228. Some data may be involved in building an initial model and, thereafter, the model may optionally be updated in response to model output, changes in time, physical phenomena, additional data, etc. As an example, data for modeling may include one or more of the following: depth or thickness maps and fault geometries and timing from seismic, remote-sensing, electromagnetic, gravity, outcrop and well log data. Furthermore, data may include depth and thickness maps stemming from facies variations (e.g., due to seismic unconformities) assumed to following geological events ("iso" times) and data may include lateral facies variations (e.g., due to lateral variation in sedimentation characteristics).

To proceed to modeling of geological processes, data may be provided, for example, data such as geochemical data (e.g., temperature, kerogen type, organic richness, etc.), timing data (e.g., from paleontology, radiometric dating, magnetic reversals, rock and fluid properties, etc.) and boundary condition data (e.g., heat-flow history, surface temperature, paleowater depth, etc.).

In basin and petroleum systems modeling, quantities such as temperature, pressure and porosity distributions within the sediments may be modeled, for example, by solving partial differential equations (PDEs) using a finite element method (e.g., or other numerical technique). Modeling may also model geometry with respect to time, for example, to account for changes stemming from geological events (e.g., deposition of material, erosion of material, shifting of material, etc.).

Various techniques for modeling of temperature, pressure, porosity, and geometry in basin and petroleum systems are, for example, described in a text by Hantschel et al. (2009), entitled "Fundamentals of Basin and Petroleum Systems Modeling".

A commercially available modeling framework marketed as the PETROMOD® framework (Schlumberger Limited, Houston, Texas) includes features for input of various types of information (e.g., seismic, well, geological, etc.) to model evolution of a sedimentary basin. The PETROMOD® framework provides for petroleum systems modeling via input of various data such as seismic data, well data and other geological data, for example, to model evolution of a sedimentary basin. The PETROMOD® framework may predict if, and how, a reservoir has been charged with hydrocarbons, including, for example, the source and timing of hydrocarbon generation, migration routes, quantities, pore pressure and hydrocarbon type in the subsurface or at surface conditions. In combination with a framework such as the PETREL® framework, workflows may be constructed to provide basin-to-prospect scale exploration solutions. Data exchange between frameworks can facilitate construction of models, analysis of data (e.g., PETROMOD® framework data analyzed using PETREL® framework capabilities), and coupling of workflows.

As shown in Fig. 2, the formation 230 includes a horizontal surface and various subsurface layers. As an example, a borehole may be vertical. As another example, a borehole may be deviated. In the example of Fig. 2, the borehole 235 may be considered a vertical borehole, for example, where the z-axis extends downwardly normal to the horizontal surface of the formation 230.

As to the convention 240 for dip, as shown, the three dimensional orientation of a plane can be defined by its dip and strike. Dip is the angle of slope of a plane from a horizontal plane (e.g., an imaginary plane) measured in a vertical plane in a specific direction. Dip may be defined by magnitude (e.g., also known as angle or amount) and azimuth (e.g., also known as direction). As shown in the convention 240 of Fig. 2, various angles ø indicate angle of slope downwards, for example, from an imaginary horizontal plane (e.g., flat upper surface); whereas, dip refers to the direction towards which a dipping plane slopes (e.g., which may be given with respect to degrees, compass directions, etc.). Another feature shown in the convention of Fig. 2 is strike, which is the orientation of the line created by the intersection of a dipping plane and a horizontal plane (e.g., consider the flat upper surface as being an imaginary horizontal plane).

Some additional terms related to dip and strike may apply to an analysis, for example, depending on circumstances, orientation of collected data, etc. One term is "true dip" (see, e.g., $Dip_T$ in the convention 240 of Fig. 2). True dip is the dip of a plane measured directly perpendicular to strike (see, e.g., line directed northwardly and labeled "strike" and angle $\alpha_{90}$) and also the maximum possible value of dip magnitude. Another term is "apparent dip" (see, e.g., $Dip_A$ in the convention 240 of Fig. 2). Apparent dip may be the dip of a plane as measured in any other direction except in the direction of true dip (see, e.g., $ø_A$ as $Dip_A$ for angle $\alpha$); however, it is possible that the apparent dip is equal to the true dip (see, e.g., ø as $Dip_A = Dip_T$ for angle $\alpha_{90}$ with respect to the strike). In other words, where the term apparent dip is used (e.g., in a method, analysis, algorithm, etc.), for a particular dipping plane, a value for "apparent dip" may be equivalent to the true dip of that particular dipping plane.

As shown in the convention 240 of Fig. 2, the dip of a plane as seen in a cross-section perpendicular to the strike is true dip (see, e.g., the surface with ø as $Dip_A = Dip_T$ for angle $\alpha_{90}$ with respect to the strike). As indicated, dip observed in a cross-section in any other direction is apparent dip (see, e.g., surfaces labeled $Dip_A$). Further, as shown in the convention 240 of Fig. 2, apparent dip may be approximately 0 degrees (e.g., parallel to a horizontal surface where an edge of a cutting plane runs along a strike direction).

In terms of observing dip in wellbores, true dip is observed in wells drilled vertically. In wells drilled in any other orientation (or deviation), the dips observed are apparent dips (e.g., which are referred to by some as relative dips). In order to determine true dip values for planes observed in such boreholes, as an example, a vector computation (e.g., based on the borehole deviation) may be applied to one or more apparent dip values.

As mentioned, another term that finds use in sedimentological interpretations from borehole images is "relative dip" (e.g., $Dip_R$). A value of true dip measured from borehole images in rocks deposited in very calm environments may be subtracted (e.g., using vector-subtraction) from dips in a sand body. In such an example, the resulting dips are called relative dips and may find use in interpreting sand body orientation.

A convention such as the convention 240 may be used with respect to an analysis, an interpretation, an attribute, etc. (see, e.g., various blocks of the system 100 of Fig. 1). As an example, various types of features may be described, in part, by dip (e.g., sedimentary bedding, faults and fractures, cuestas, igneous dikes and sills, metamorphic foliation, etc.).

Seismic interpretation may aim to identify and/or classify one or more subsurface boundaries based at least in part on one or more dip parameters (e.g., angle or magnitude, azimuth, etc.). As an example, various types of features (e.g., sedimentary bedding, faults and fractures, cuestas, igneous dikes and sills, metamorphic foliation, etc.) may be described at least in part by angle, at least in part by azimuth, etc.

As shown in Fig. 2, the system 250 includes one or more information storage devices 252, one or more computers 254, one or more networks 260 and one or more modules 270. As to the one or more computers 254, each computer may include one or more processors (e.g., or processing cores) 256 and memory 258 for storing instructions (e.g., modules), for example, executable by at least one of the one or more processors. As an example, a computer may include one or more network interfaces (e.g., wired or wireless), one or more graphics cards, a display interface (e.g., wired or wireless), etc. As an example, imagery such as surface imagery (e.g., satellite, geological, geophysical, etc.) may be stored, processed, communicated, etc. As an example, data may include SAR data, GPS data, etc. and may be stored, for example, in one or more of the storage devices 252.

As an example, the one or more modules 270 may include instructions (e.g., stored in memory) executable by one or more processors to instruct the system 250 to perform various actions. As an example, the system 250 may be configured such that the one or more modules 270 provide for establishing the framework 170 of Fig. 1 or a portion thereof. As an example, one or more methods, techniques, etc. may be performed using one or more modules, which may be, for example, one or more of the one or more modules 270 of Fig. 2.

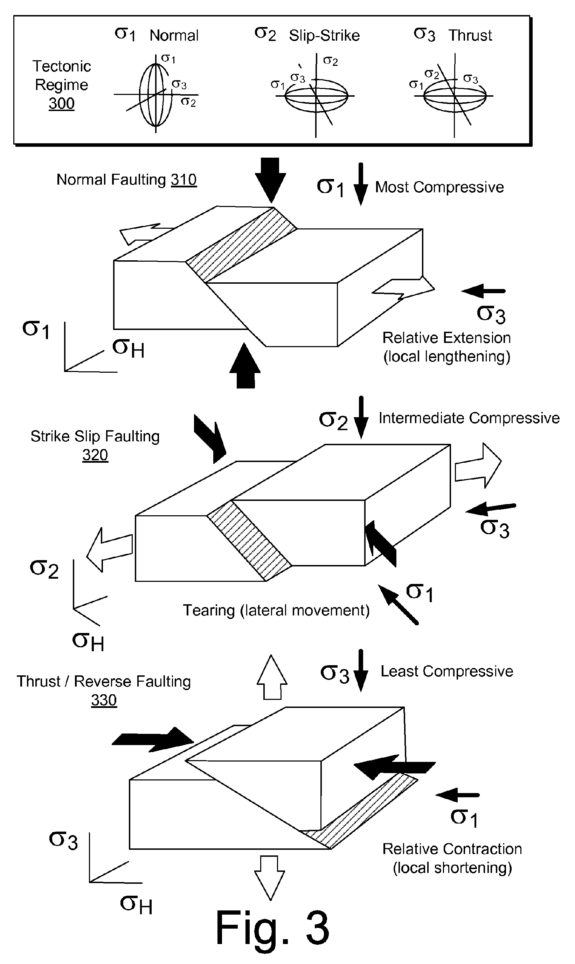

Fig. 3 shows an example of a tectonic regime 300 and examples of normal faulting 310, strike slip faulting 320 and thrust or reverse faulting 330. Stress may be defined, for example, as force per unit area acting on a plane. In a solid body, for example, a stress state at a point in the solid body may be described by orientations and magnitudes of three stresses called principal stresses, which are oriented perpendicular to each other (e.g., orthogonal to each other).

As shown in Fig. 3, $\sigma_1$, $\sigma_2$ and $\sigma_3$ are compressive or tensile principal stresses where, in magnitude, 1 > 2 > 3. As an example, about a point, the three principal stresses may be shown, or represented, as an ellipsoid where the magnitude of each component defines a maximum (e.g., and a "minimum") along a respective one of the three orthogonal axes. The "minimum" is actually another maximum as compressive stress and shortening strain are considered positive in rock mechanics and structural geology because in the Earth the three principal stresses tend to be compressive (e.g., except around underground voids such as caves, very near to the Earth's surface, etc.).

The tectonic regime 300 may be defined by considering one axis being vertical. For example, a normal fault regime corresponds to $\sigma_1$ being vertical, a strike slip fault regime corresponds to $\sigma_2$ being vertical and a thrust or reverse fault regime corresponds to $\sigma_3$ being vertical. The tectonic regime 300 may also define stresses $\sigma_H$, $\sigma_h$ and $\sigma_v$ are the maximum horizontal stress ($\sigma_H$), a minimum horizontal stress ($\sigma_h$) that may be orthogonal to the maximum horizontal stress, and a vertical stress ($\sigma_v$). The orientation of the maximum horizontal stress $\sigma_H$ may be defined by an angle $\theta_H$, which may be local (e.g., for a point or a feature), far field, etc.

As to far field stress, a model composed of multiple fault surfaces may be defined as being subject to a constant far field stress tensor $\sigma_R$ in a global coordinate system:

$$\sigma_R = \begin{bmatrix} a_{11} & a_{12} & a_{13} \\ & a_{22} & a_{23} \\ & & a_{33} \end{bmatrix}$$

For a sub-horizon far field stress, the $a_{13}$ and $a_{23}$ entries may be assumed to be approximately zero and, as the addition of a hydrostatic stress does not change $\sigma_R$, the $a_{33}$ entry may be subtracted from the $a_{11}$ entry and subtracted from the $a_{22}$ entry to simplify the equation for $\sigma_R$. Further, using spectral decomposition, the equation for $\sigma_R$ may be written as follows:

$$\sigma_R = R_\theta^T \sigma R_\theta \text{ where } \sigma = \begin{bmatrix} \sigma_1 & \\ & \sigma_2 \end{bmatrix} \text{ and } R_\theta = \begin{bmatrix} cos\theta & -sin\theta \\ sin\theta & cos\theta \end{bmatrix}$$

Thus, the reduced far field stress may be represented by two of the principal values and a rotation matrix around a global axis (e.g., a z-axis), again, assuming a sub-horizon stress tensor. An equation for the reduced far field stress may be further transformed by representing $\sigma_2$ as a function of $\sigma_1$ using a parameter k. Yet further, by scaling of the far field stress by a parameter $\delta$ (e.g., applied to, for example, displacement discontinuity on faults as well as the displacement, strain and stress fields at observation points), measurements at data points may be globally normalized, which may ease computation such that, after solution, the recovered far field stress, displacement and stress fields may be scaled back by a factor $\delta^{-1}$ (e.g., $\delta_m^{-1}$ where "m" refers to measured). Such an approach allows for representation of the far field stress as a function of two parameters $\theta$ and k, for example, as follows:

$$\sigma_R(\theta, k) = R_\theta^T \begin{bmatrix} 1 & \\ & k \end{bmatrix} R_\theta$$

In such an example, the parameter θ is bound between - 90° and + 90° and the parameter *k* is bound between about - 10 and about + 10 where it may be assumed that uniaxial remote stress starts to occur when k is about greater than about 10. In such an example, where k is unity, one finds a hydrostatic stress tensor.

As to paleostress inversion, the principle of superposition may be applied, for example, to recover the displacement, strain and stress at an observation point. As an example, far field stress may be recovered using the aforementioned parameters $a_{11}$, $a_{22}$ and $a_{33}$, for example, where three parameters may be cast as: $\bar{a}_{11} = a_{11} - a_{11}$, $\bar{a}_{22} = a_{22} - a_{33}$, and $a_{12}$.

As an example, for forward modeling for an estimation of slip distribution on faults, and consequently the associated perturbed stress field, the main unknowns may be the orientation and relative magnitudes of the far field stress $\sigma_R$. If field measurements are known at some given observation points (e.g., displacement, strain and/or stress, fractures orientation, secondary fault planes that formed in the vicinity of major faults, etc.), then it may be possible to recover the aforementioned three parameters and thus the tectonic stress $\sigma_R$ and the corresponding tectonic regime.

An inversion method may be, for example, constrained using one or more of various types of data. For example, one type may include orientation information and another type may include displacement and/or stress magnitude information. Another example is disclosed in US Patent Application Publication No. US 2012/0072188 A1 (22 March 2012), entitled "Stress and Fracture Modeling using the Principle of Superposition".

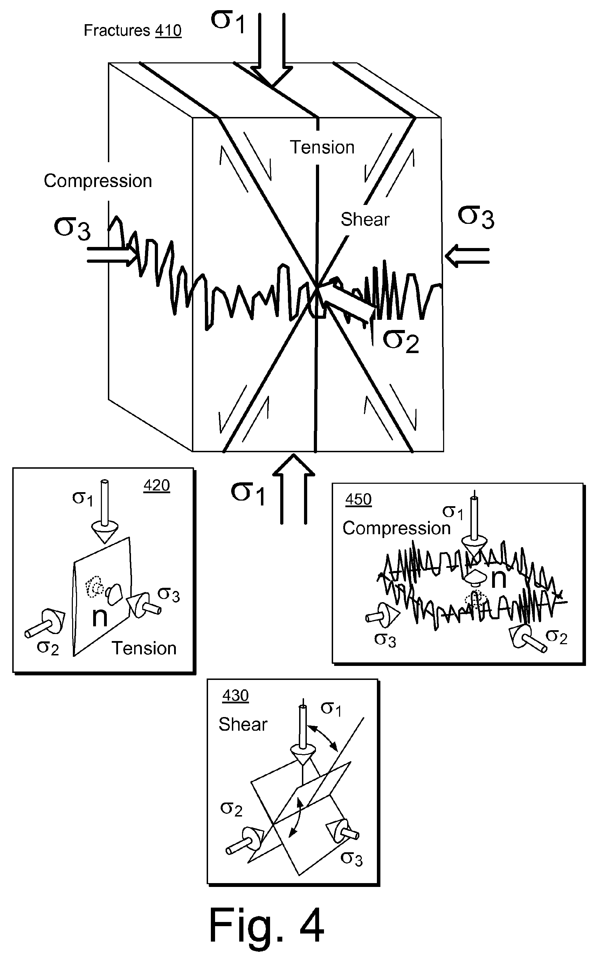

Fig. 4 shows some examples of orientation information with respect to fractures 410, which may include a tension fracture 420 (e.g., a joint), a shear fracture 430 and a compression fracture 450 (e.g., a stylolite). As an example, the fractures 420, 430 and 450 may be referred to as mechanical fractures; noting that chemical, thermal, etc. phenomena may be involved.

A tension fracture may form where tensile stress in a direction perpendicular to a potential fracture plane reaches a tensile strength of rock. A tension fracture may exhibit an extension perpendicular to fracture walls. Types of tension fractures (e.g., or tensile fractures) include, for example, joints and veins.

A shear fracture may be generated by shear stress. A shear fracture may be a fracture along which the relative movement is parallel to fracture walls. Types of shear fractures include, for example, faults and deformation bands.

A compression fracture (or an anticrack or closing fracture) may form with a compressive stress in a direction perpendicular to a potential fracture plane. A compression fracture may show a contraction perpendicular to fracture walls. Types of compression fractures include, for example, stylolites and compaction bands.

As an example, a natural fracture orientation may be unrelated to orientations of present-day stresses in a rock mass because, for example, fracture orientation reflects orientations of stresses in the fractured rock at the time of fracture formation (e.g., consider an event in geologic time), regional stress regimes change through time, natural fractures were formed in geological past under influence of paleostresses (e.g., ancient stresses) that no longer prevail, etc.

As an example, orientation and density of fracture sets may vary with position in a region of interest because stress regimes vary in space as well as in time even if the regional stress maintains a relatively constant orientation (e.g., far field stress).

As an example, local stresses may differ in orientation and/or magnitude from regional stresses due to folding, faulting, lithological differences, diagenesis, pore-pressure variations and other influences.

Referring to Fig. 4, a joint may be a natural rock fracture formed predominantly by mode I movement. As an example, plumose surface morphology may be diagnostic of jointing. Unmineralized joints may be quite permeable and contained joints may be joints that are contained within individual beds of a brittle lithology. Two particular types of joints may be useful because they may provide slip-sense, and sometimes slip-direction, criteria for fault movement: Pinnate joints, which are a type of joint that forms adjacent to faults during fault movement and/or propagation; and tail joints or wing cracks form at the tip of a fault.

Fig. 4 also shows two faults that intersect, for example, to form an acute angle and an obtuse angle (see, e.g., double headed arrows in the diagram of for shear fracture 430). As an example, a fault may be a type of natural rock fracture formed predominantly by mode II and/or mode III movements. It is possible, for example, that a natural rock fracture that initially formed as a joint may be reactivated as a sliding-mode fracture and be deemed a "faulted" joint.

Faults may have a wide range of morphologies and fill types. Faults may range from highly permeable to highly impermeable depending on the manner of formation and type of fill. Fault slip-sense and slip-direction may, at times, be determined from surface features such as slickenlines for instance.

As to a stylolite (e.g., a pressure solution seam), it may be defined as a zone of insoluble residue produced by stress-enhanced dissolution. Stylolites may have a cone-in-cone structure that produces a characteristic zig-zag appearance in cross section (see, e.g., the stylolite represented in Fig. 4). A stylolite is a type fracture, for example, a stress-corrosion anticrack.

Stylolites may serve as flow barriers because they may include insoluble residue that may be very fine-grained and, for example, clay-rich. Stylolites may be weak and, for example, readily reactivated as joints by later tectonic events. In hydrocarbon reservoirs, a stylolite may be permeable.

As an example, a slickolite may be defined as being a type of stylolite in which the teeth are inclined at less than about 90° to the plane of the stylolite. Slickolites may form at an angle to $\sigma_1$, for example, by dissolution along a preexisting fracture. Slickolites may be surfaces of shear displacement as well as shortening.

As an example, another type of fracture may be an artificial or induced fracture. Such a fracture may be defined as a rock fracture produced by human activities, such as drilling, accidental or intentional hydrofracturing, core handling, etc.

As illustrated in Fig. 4, a joint (e.g., a tension fracture) may provide information as to a direction of $\sigma_3$ while a stylolite (e.g., a compression fracture) may provide information as to a direction of $\sigma_1$. Thus, as an example, joints and/or stylolites may provide orientation information (e.g., local orientation information). As discussed further below, as an example, conjugate faults (e.g., shear fractures) may provide information, for example, where an angle between $\sigma_1$ and one of the faults may be related to an internal coefficient of friction.

As an example, using fractures and stylolites orientations for opening fractures (joints, veins, dikes) the orientation of the normal to a fracture plane may indicate the direction of the least compressive stress direction ($\sigma_3$). As an example, one or more normals (e.g., normal vectors) to pressure solution seams and/or stylolites may indicate the direction of the most compressive stress ($\sigma_1$). As an example, using measurements of orientations of fractures, pressure solution seams and/or stylolites, one may recover an estimation of the tectonic regime which generated such features (e.g., via an inversion method).

As an example, at an observation point P, the local perturbed stress field may be determined from a numerical point of view by using three linearly independent simulations. A goal may be to determine the best fit of the far field stress $\sigma_R$, therefore the three parameters $\bar{a}_{11}$, $\bar{a}_{22}$, and $\bar{a}_{12}$ (e.g., or other representations thereof), given some orientations of opening fracture planes for which the normals coincide with the directions of the least compressive stress $\sigma_1^P$ at at P, or equivalently for which the plane of the fracture contains the most compressive stress $\sigma_3$. By varying the three parameters, the state of stress at an observation point P may be computed, for example, using models and cost function minimization (e.g., based in part on the most compressive stress, the least compressive stress, etc.).

As an example, a recovered paleostress based on observations (e.g., measurements) may be given with an orientation (e.g., N161) and, for example, with a ratio that may be used in conjunction with a definition of a tectonic regime to characterize faulting (e.g., normal, strike slip, thrust, etc.). As an example, after a paleostress has been resolved, a predicted fracture pattern may be computed, for example, via lines perpendicular to local least compressive stress. As an example, such computations may provide output via an observation grid that may be compared to one or more observed fracture patterns.

As an example, an inversion may be performed using data such as, for example, secondary fault plane data. For example, a secondary fault plane may develop in the vicinity of larger faults. As an example, two conjugate failure planes may intersect along $\sigma_2$ where fault orientation is influenced by orientation of the principal stresses and friction (e.g., consider an internal friction angle). In such an example, models and cost function minimization may be performed to recover the state of stress at an observation point P (e.g., tectonic regime, stress ratio, and orientation). As an example, a stress ratio may be defined to be $\sigma_H/\sigma_h$.

As an example, fault striations may be used as data for performing an inversion to recover information about a tectonic regime. As mentioned, magnitude information may be used as data for performing an inversion to recover information about a tectonic regime. As an example, GPS data and/or InSAR data (interferometric synthetic aperture radar) may be used for performing an inversion to recover information about a tectonic regime. As an example, flattened horizon data may be used for performing an inversion to recover information about a tectonic regime. As an example, dip-slip data (e.g., from seismology) may be used for performing an inversion to recover information about a tectonic regime. As an example, one or more types of data may be provided and optionally weighted (e.g., by type, etc.) for performing one or more inversions to, for example, recover information about a tectonic regime (e.g., paleostress).

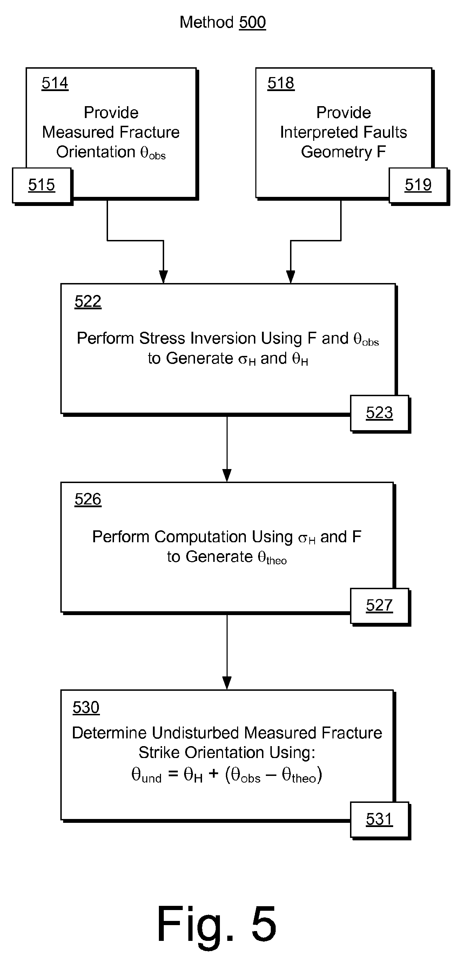

Fig. 5 shows an example of a method 500 that can determine "undisturbed" or "unperturbed" information. For example, undisturbed fractures strike orientation may be used to better understand the effect of a perturbed stress field and may, for example, be used to better distinguish between different fracture sets (e.g., the effect of stress rotation, determination of potential biased data, etc.).

As an example, a method may include rotation of measured fracture orientation to an unperturbed state, for example, as if no stress perturbation were present. Such a method may be described as a "restoration" method that acts to restore fracture orientation from a perturbed state (e.g., after particular fault activity) to an undisturbed state (e.g., prior to particular fault activity).

In the example of Fig. 5, the method 500 includes a provision block 514 for providing measured fracture

orientation ($\theta_{obs}$) and a provision block 518 for providing interpreted faults geometry (F). As shown, such information may be input to a performance block 522 for performing stress inversion to generate horizontal stress magnitude and orientation values ($\sigma_H$ and $\theta_H$). In the method 500, the stress magnitude ($\sigma_H$) and the faults geometry (F) may be input to another performance block 526 for performing a computation to generate a theoretical stress orientation ($\theta_{theo}$). As shown in the example of Fig. 5, per a determination block 530, given a measured fracture orientation (e.g., via observation), a maximum horizontal stress orientation (e.g., via inversion) and a theoretical stress orientation for a theoretical fracture (e.g., via computation), the orientation of the fracture corresponding to the measured fracture orientation may be determined for an undisturbed state ($\theta_{und}$). For example, the following equation may be used: $\theta_{und} = \theta_H + (\theta_{obs} - \theta_{theo})$.

The method 500 is shown in Fig. 5 in association with various computer-readable media (CRM) blocks 515, 519, 523, 527 and 531. Such blocks generally include instructions suitable for execution by one or more processors (or processor cores) to instruct a computing device or system to perform one or more actions (see, e.g., the one or more modules 270 of Fig. 2). While various blocks are shown, a single medium may be configured with instructions to allow for, at least in part, performance of various actions of the method 500. As an example, a computer-readable medium (CRM) may be a computer-readable storage medium (e.g., a non-transitory medium).

As an example, let $\theta_H$ be the orientation of the maximum principal horizontal far field stress according to a direction (e.g., north), $\theta_{theo}$ be the theoretical strike orientation of a fracture in the perturbed stress field due to slipping faults and $\theta_{obs}$ be its observed strike orientation (according to the north). In such an example, an estimate of the angle $\theta_{theo}$ may be computed using, for example, a three-dimensional geomechanical application (e.g., the iBem3D software application). However, as a far field stress is involved, a stress inversion may be performed, for example, as described above with respect to various examples, including the examples of Fig. 4.

As an example, differences $\Delta\theta_{theo} = (\theta_{theo} - \theta_H)$ and $\Delta\theta_{obs} = (\theta_{obs} - \theta_H)$, may represent theoretical and observed angular effect of a perturbed stress field on fracture strike orientation, respectively. Where there is no perturbation one may assume, $\Delta\theta_{theo} = 0$, and consequently the strike orientation of $\theta_{theo}$ coincides with $\theta_H$. Thus, as an example, the procedure of undisturbed fracture strike orientation can include removing the theoretical $\Delta\theta_{theo}$ from $\theta_{obs}$, giving rise to an undisturbed measured fracture orientation, $\theta_{und}$: $\theta_{und} = \theta_H + (\theta_{obs} - \theta_{theo})$.

As an example, a method may include associating a fracture with one or more events. As an example, a method may include characterizing fractures as being associated with one or more events. In such an example, for a group of observed fractures, some (e.g., one set of fractures) may be associated with one event and others (e.g., another set of fractures) may be associated with another event.

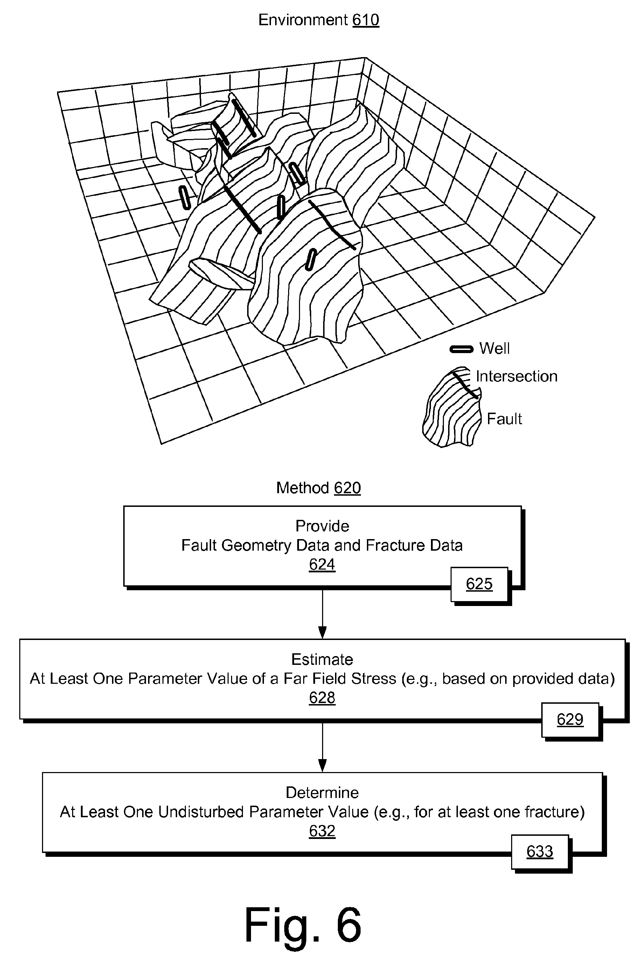

Fig. 6 shows an example of an environment 610 and an example of a method 620. As shown, the environment 610 includes a reservoir with 4 wells in which it was observed joints strike orientation around active faults (depth-contouring of 3D surfaces).

The method 620 includes a provision block 624 for providing fault geometry data and fracture data for at least one fracture; an estimation block 628 for estimating at least one parameter value of a far field stress based at least in part on the fault geometry data and the fracture data for at least one fracture; and a determination block 632 for determining at least one undisturbed parameter value for at least one of the at least one fracture. As mentioned, data for at least one fracture may be, for example, data of one or more types (e.g., orientation, magnitude, etc.).

As an example, where data includes orientation data, a method may include a provision block for providing fracture orientation and fault geometry data, an estimation block for estimating an orientation of the maximum principal compressive stress of far field stress and a determination block for determining undisturbed measured fracture strike orientation.

The method 620 is shown in Fig. 6 in association with various computer-readable media (CRM) blocks 625, 629 and 633. Such blocks generally include instructions suitable for execution by one or more processors (or processor cores) to instruct a computing device or system to perform one or more actions (see, e.g., the one or more modules 270 of Fig. 2). While various blocks are shown, a single medium may be configured with instructions to allow for, at least in part, performance of various actions of the method 620. As an example, a computer-readable medium (CRM) may be a computer-readable storage medium (e.g., a non-transitory medium).

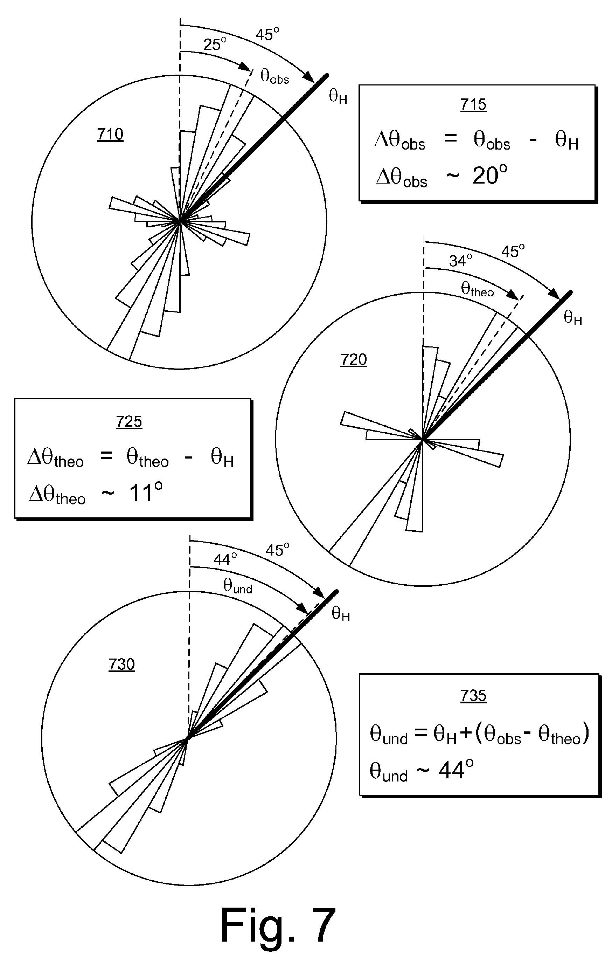

Fig. 7 shows examples of rose diagrams 710, 720 and 730 that correspond to the environment 610 of Fig. 6. Such diagrams may also visually illustrate information associated with the method 620 of Fig. 6, for example, as applied to the environment 610.

As an example, a rose diagram of fracture strike orientations may visually indicate that more than one fracture set may exist. In Fig. 7, the rose diagram 710 corresponds to the joints strike orientation from which geologists might see two different fracture sets, for example, one with a predominant orientation of about N25 (see, e.g., equation block 715). However, by using a hypothesis that fractures developed within the perturbed stress field of active faults, orientation may possibly be explained. For example, it may be possible to rotate the measured fractures orientation into an unperturbed state, as if no stress perturbation were present. According to such an approach, the rose diagram 720 shows computed joints strike orientation after regional stress inversion where, for example, two fracture sets are potentially observed where a predominant orientation is at about N34 (see, e.g., equation block 725). Given the information in the rose diagram 720, the rose diagram 730 may be generated, for example, to illustrate undisturbed joints strike orientation, which may, for example, be compared to the original rose diagram 710 and computed rose diagram 720.

In the example of Fig. 7, it may be seen that while the original rose diagram 710 exposes two fracture sets, the undisturbed one shows one fracture set 730. Furthermore, while the inverted regional state of stress gives a normal fault regime oriented N45, it may be seen that observed and computed rose diagrams 710 and 720 indicate a main strike direction orientated - N25, which does not necessarily correspond to the orientation to the maximum principal compressive stress. However, after performing the undisturbed joints strike, the regional direction of $\sigma_H$ corresponds to the main trend of the joints strike direction shown in the rose diagram 730. The remaining dispersion on the corresponding rose diagram 730, may, for example, corresponds to errors in the measure of faults geometry (e.g., over simplification of the geometries, missing faults, etc.) and orientation of joints strike.

Again, in Fig. 7, the rose diagram 710 shows observed joints orientation where two fracture sets may be potentially observed where a main trend is oriented at about N25. In the diagram 710, the angle $\theta_H$ corresponds to the orientation of the maximum principal compressive stress of the far field stress. As to the diagram 720, it illustrates computed joints strike orientation, for example, after computing the regional far field stress by stress inversion where a main trend is oriented at about N34. In the diagram 730, undisturbed joints strike orientation is illustrated where the second fracture set has "disappeared" and a main trend is now oriented at about N44, which is close to the orientation of $\theta_H = 45$.

As demonstrated by application of the example method 620 to the example environment 610, a workflow may provide for analysis of fracture sets orientation by removing the effect of mechanical interactions due to faulting.

As an example, a method may include input of data as to tension fractures and compression fractures. As an example, a method may include input of data as to shear fractures. For example, two conjugate shear fractures may be determined according to the internal friction angle of the rock. In such an example, a best fit to the observed shear fractures may be retained (e.g., as input) and a method applied.

As an example, for multiple tectonic events, it may be possible to recover those for which the tectonic regime and/or the orientation and/or magnitude are noticeably different (e.g., according to one or more criteria).

A method may include determining different events from fractures orientation (joints, stylolites, fault planes, etc.), for example, via measurements along well bores (e.g., boreholes). In such an example, after doing a first simulation, a cost may be attached at each observation point that shows the confidence of a recovered tectonic stress relative to data attached to that observation point (e.g., where a cost of zero and one means a good and a bad confidence, respectively). As an example, by selecting data points that are under a given threshold value and running another simulation with these points, it may be possible to extract a more precise paleostress. Then, the remaining data points above the threshold value may be used to run another simulation and the paleostress state to recover another tectonic event. If a graph of a new cost shows disparities, the above procedure may be repeated until satisfactory results are achieved. During determination of tectonic phases, observation points may be classified with respect to a tectonic event, even though a chronology of the tectonic phases may be undetermined.

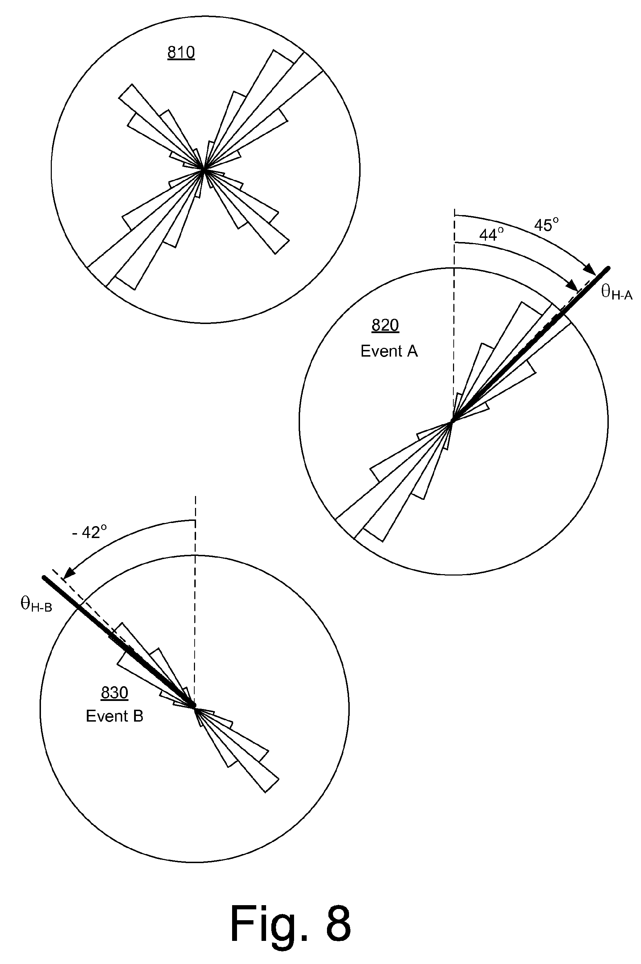

Fig. 8 shows examples of rose diagrams 810, 820 and 830 where, for example, the data in the diagram 810 may correspond to two different events: Event A and Event B. For example, inversions may provide information as to $\sigma_{H-A}$, $\theta_{H-A}$ and $\sigma_{H-B}$, $\theta_{H-B}$. In turn, it may be possible to compute $\theta_{theo-A}$ and $\theta_{theo-B}$. In such an example, two populations (e.g., sets) of fractures may be uncovered and presented in their respective undisturbed states (see, e.g., the rose diagram 820 for Event A and the rose diagram 830 for Event B).

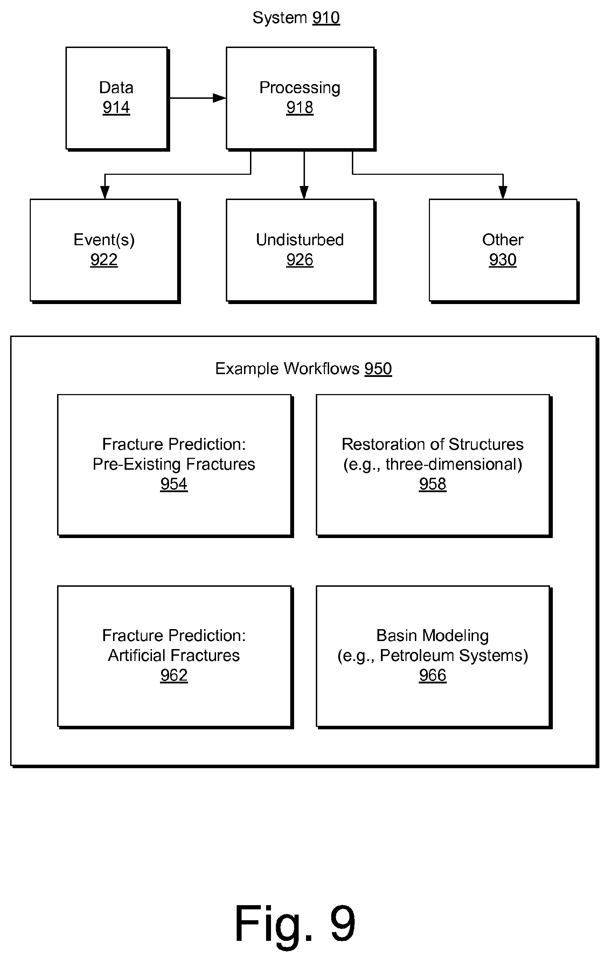

Fig. 9 shows an example of a system 910 and examples of workflows 950. As shown, the system 910 may include a data block 914, a processing block 918 and various output blocks, including a one or more event block 922, an undisturbed block 926 and an "other" block 930. As an example, one or more workflows may be constructed using the system 910. For example, a fracture prediction workflow 954 may provide for prediction of one or more pre-existing fractures, a restoration of structures workflow 958 may provide for restoration of one or more structures (e.g., optionally in three-dimensions), a fracture prediction workflow 962 may provide for prediction of one or more artificial fractures (e.g., induced fractures such as hydraulic fractures), and a basin modeling workflow 966 for performing basin modeling (e.g., petroleum systems modeling), for example, using a model that may be a present-day model, a restored model, etc.

As an example, a method may be applied to analyze existing or prospective hydraulic fractures (e.g., in part by analysis of natural fractures in a perturbed field such as a shale field, carbonate field, etc.). As an example, an induced fracture may be processed to produce the induced fracture in an undisturbed state. As an example, a workflow may be formulated to assess one or more of wellbore stability, shale gas availability, shale gas production, etc.

As an example, a method may include estimating a far field stress with respect to time. For example, where data as to past fractures are used as input, an inversion technique may provide one or more parameter values for a far field stress of the past (e.g., paleostress). As an example, where data as to one or more present-day fractures are used as input, an inversion technique may provide one or more parameter values for a far field stress of the present-day (e.g., within a present geologic period of time). For example, an induced fracture (e.g., a hydraulic fracture) may be considered a fracture of the present-day. As an example, a method may include providing data for natural fractures, induced fractures (e.g., artificial fractures) or a combination of natural fractures and induced fractures. As an example, an inversion technique may provide a far field paleostress or a far field present-day stress (e.g., depending on input data, etc.). As an example, one or more far field stress parameter values may be provided by an inversion technique, for example, without regard to time (e.g., without including a time dimension as a parameter).

As an example, time may be included as a parameter in a method, for example, where multiple events may be exhibited by input data. As an example, where a hydraulic fracturing operation has been performed, one or more far field stress parameter values may be based in part on natural fractures (e.g., $\sigma_{H-N}$, $\theta_{H-N}$) and one or more far field stress parameter values may be based in part on hydraulic fractures ($\sigma_{H-H}$, $\theta_{H-H}$). As an example, one or more undisturbed parameter values may be determined for natural fractures, hydraulic fractures or both.

As an example, a method can include providing fault geometry data and fracture data for a fracture; estimating a parameter value of a far field stress based at least in part on the fault geometry data and the fracture data; and determining an undisturbed parameter value for the fracture. In such an example, the method may include estimating at least one of magnitude and direction of a far field stress, for example, via an inversion technique.

As an example, a method may include providing fault geometry data and fracture data for at least one fracture; estimating at least one parameter value of a far field stress based at least in part on the fault geometry data and the fracture data for at least one fracture; and determining at least one undisturbed parameter value for at least one of the at least one fracture. In such an example, the fracture data for at least one fracture may include orientation data.

As an example, fracture data for at least one fracture may include one or more of tension fracture data, compression fracture data, shear fracture data or other fracture data.

As an example, a method may include estimating at least one parameter value of a far field stress, for example, via an inversion technique. As an example, at least one parameter may include a magnitude (e.g., magnitude of $\sigma_H$) and/or a direction (e.g., $\theta_H$, which may be an angle).

As an example, a method may include determining at least one undisturbed parameter value by, in part, computing a theoretical parameter value that has a corresponding measured parameter value. In such an example, the theoretical parameter value and the measured parameter value may be orientation angles. As an example, at least one undisturbed parameter value may include an undisturbed orientation angle.

As an example, a method may include estimating at least one parameter value of a far field stress by estimating parameter values for far field stresses associated with different events. In such an example, the method may include associating a determined undisturbed parameter value with one of the different events.

As an example, a system can include a processor; memory operatively coupled to the processor; and one or more modules that include processor-executable instructions stored in the memory to instruct the system to provide fault geometry data and fracture data for a fracture; estimate a parameter value of a far field stress based at least in part on the fault geometry data and the fracture data; and determine an undisturbed parameter value for the fracture.

As an example, a system can include a processor; memory operatively coupled to the processor; and one or more modules that include processor-executable instructions stored in the memory to instruct the system to provide fault geometry data and fracture data for at least one fracture; estimate at least one parameter value of a far field stress based at least in part on the fault geometry data and the fracture data for at least one fracture; and determine at least one undisturbed parameter value for at least one of the at least one fracture. In such an example, the fracture data for at least one fracture may include orientation data.

As an example, a system may include an interface, for example, for receipt of data. For example, such an interface may be configured for receipt of fracture data for at least one fracture where the fracture data may be one or more of tension fracture data (e.g., joint, etc.), compression fracture data (e.g., stylolite, etc.) and fault fracture data (e.g., shear) and optionally other fracture data. Such an interface may be operatively coupled to a data store (e.g., a SAN), a network, the cloud, etc.

As an example, a system may include one or more modules that include processor-executable instructions stored in memory to instruct the system to perform an inversion technique to estimate the at least one parameter value of a far field stress.

As an example, one or more computer-readable storage media can include computer-executable instructions to instruct a computing system to: provide fault geometry data and fracture data for a fracture; estimate a parameter value of a far field stress based at least in part on the fault geometry data and the fracture data; and determine an undisturbed parameter value for the fracture.

As an example, one or more computer-readable storage media can include computer-executable instructions to instruct a computing system to: provide fault geometry data and fracture data for at least one fracture; estimate at least one parameter value of a far field stress based at least in part on the fault geometry data and the fracture data for at least one fracture; and determine at least one undisturbed parameter value for at least one of the at least one fracture. In such an example, instructions may be included to instruct a computing system to perform petroleum systems modeling based at least in part on the at least one undisturbed parameter value. As an example, one or more computer-readable storage media may include computer-executable instructions to instruct a computing system to predict a fracture orientation of an artificial fracture based at least in part on at least one undisturbed parameter value.

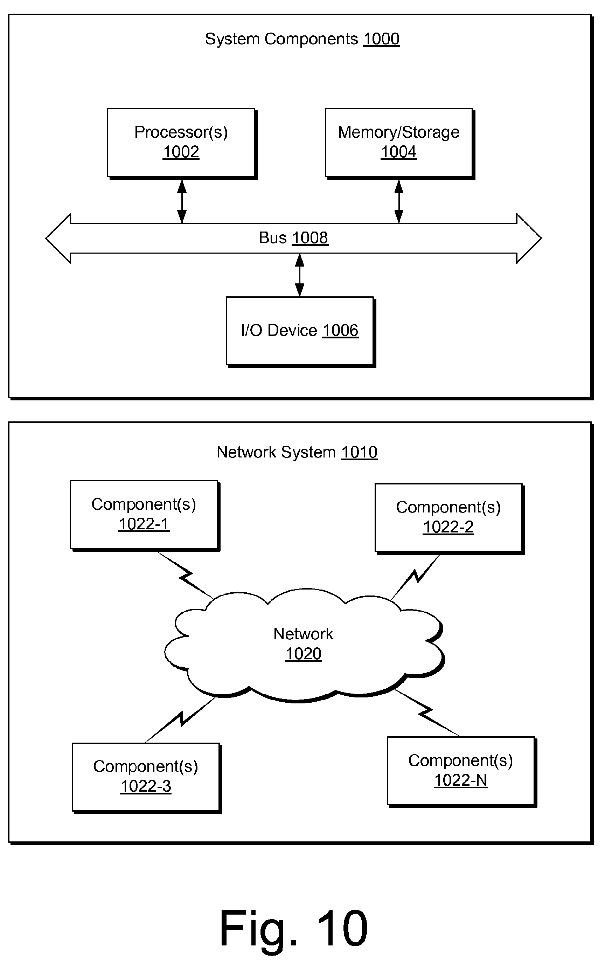

Fig. 10 shows components of an example of a computing system 1000 and an example of a networked system 1010. The system 1000 includes one or more processors 1002, memory and/or storage components 1004, one or more input and/or output devices 1006 and a bus 1008. In an example embodiment, instructions may be stored in one or more computer-readable media (e.g., memory/storage components 1004). Such instructions may be read by one or more processors (e.g., the processor(s) 1002) via a communication bus (e.g., the bus 2008), which may be wired or wireless. The one or more processors may execute such instructions to implement (wholly or in part) one or more attributes (e.g., as part of a method). A user may view output from and interact with a process via an I/O device (e.g., the device 1006). In an example embodiment, a computer-readable medium may be a storage component such as a physical memory storage device, for example, a chip, a chip on a package, a memory card, etc. (e.g., a computer-readable storage medium).

In an example embodiment, components may be distributed, such as in the network system 1010. The network system 1010 includes components 1022-1, 1022-2, 1022-3, ... 1022-N. For example, the components 1022-1 may include the processor(s) 1002 while the component(s) 1022-3 may include memory accessible by the processor(s) 1002. Further, the component(s) 1002-2 may include an I/O device for display and optionally interaction with a method. The network may be or include the Internet, an intranet, a cellular network, a satellite network, etc.

As an example, a device may be a mobile device that includes one or more network interfaces for communication of information. For example, a mobile device may include a wireless network interface (e.g., operable via IEEE 802.11, ETSI GSM, BLUETOOTH®, satellite, etc.). As an example, a mobile device may include components such as a main processor, memory, a display, display graphics circuitry (e.g., optionally including touch and gesture circuitry), a SIM slot, audio/video circuitry, motion processing circuitry (e.g., accelerometer, gyroscope), wireless LAN circuitry, smart card circuitry, transmitter circuitry, GPS circuitry, and a battery. As an example, a mobile device may be configured as a cell phone, a tablet, etc. As an example, a method may be implemented (e.g., wholly or in part) using a mobile device. As an example, a system may include one or more mobile devices.

As an example, a system may be a distributed environment, for example, a so-called "cloud" environment where various devices, components, etc. interact for purposes of data storage, communications, computing, etc. As an example, a device or a system may include one or more components for communication of information via one or more of the Internet (e.g., where communication occurs via one or more Internet protocols), a cellular network, a satellite network, etc. As an example, a method may be implemented in a distributed environment (e.g., wholly or in part as a cloud-based service).

As an example, information may be input from a display (e.g., consider a touchscreen), output to a display or both. As an example, information may be output to a projector, a laser device, a printer, etc. such that the information may be viewed. As an example, information may be output stereographically or holographically. As to a printer, consider a 2D or a 3D printer. As an example, a 3D printer may include one or more substances that can be output to construct a 3D object. For example, data may be provided to a 3D printer to construct a 3D representation of a subterranean formation. As an example, layers may be constructed in 3D (e.g., horizons, etc.), geobodies constructed in 3D, etc. As an example, holes, fractures, etc., may be constructed in 3D (e.g., as positive structures, as negative structures, etc.).

Although only a few example embodiments have been described in detail above, those skilled in the art will readily appreciate that many modifications are possible in the example embodiments. Accordingly, all such modifications are intended to be included within the scope of this disclosure as defined in the following claims.

**Claims**

**1.** A computer-implemented method comprising:

providing fault geometry data and fracture data for a fracture;
estimating magnitude and orientation parameter values ($\sigma_H$ and $\theta_H$) of a far field stress and a theoretical orientation parameter value ($\theta_{theo}$) based at least in part on the fault geometry data and the fracture data; and
determining an undisturbed orientation parameter value ($\theta_{und}$) for the fracture wherein the determining comprises subtracting the theoretical orientation parameter value ($\theta theo$) from an observed orientation parameter value ($\theta_{obs}$) that is based at least in part on the fracture data.

**2.** The method of claim 1 wherein the fracture data comprises orientation data.

**3.** The method of claim 1 wherein the fracture data comprises tension fracture data.

**4.** The method of claim 1 wherein the fracture data comprises compression fracture data.

**5.** The method of claim 1 wherein the fracture data comprises shear fracture data.

**6.** The method of claim 1 wherein the estimating comprises estimating magnitude of $\sigma_H$ via an inversion technique.

**7.** The method of claim 1 wherein the estimating comprises estimating $\theta_H$ via an inversion technique.

**8.** The method of claim 1 wherein the estimating comprises estimating the magnitude and orientation parameter values via an inversion technique.

**9.** The method of claim 1 wherein the theoretical orientation parameter value and the measured orientation parameter value are orientation angles.

**10.** The method of claim 9 wherein the undisturbed orientation parameter value comprises an undisturbed orientation angle.

**11.** The method of claim 1 comprising estimating magnitude and orientation parameter values for far field stresses associated with different events.

**12.** The method of claim 11 associating a determined undisturbed orientation parameter value with one of the different events.

**13.** A system comprising:

> a processor;
> memory operatively coupled to the processor; and
> one or more modules that comprise processor-executable instructions stored in the memory to instruct the system to

>> provide fault geometry data and fracture data for a fracture;
>> estimate magnitude and orientation parameter values ($\sigma_H$ and $\theta_H$) of a far field stress and a theoretical orientation parameter value ($\theta_{theo}$) based at least in part on the fault geometry data and the fracture data; and
>> determine an undisturbed parameter value for the fracture wherein the instructions to determine comprise instructions to subtract the theoretical orientation parameter value ($\theta_{theo}$) from an observed orientation parameter value ($\theta_{obs}$) that is based at least in part on the fracture data.

**14.** One or more computer-readable storage media comprising computer-executable instructions to instruct a computing system to:

> provide fault geometry data and fracture data for a fracture;
> estimate magnitude and orientation parameter values ($\sigma_H$ and $\theta_H$) of a far field stress and a theoretical orientation parameter value ($\theta_{theo}$) based at least in part on the fault geometry data and the fracture data; and
> determine an undisturbed parameter value for the fracture wherein the instructions to determine comprise instructions to subtract the theoretical orientation parameter value ($\theta_{theo}$) from an observed orientation parameter value ($\theta_{obs}$) that is based at least in part on the fracture data.

**15.** The one or more computer-readable storage media of claim 14 further comprising computer-executable instructions to instruct a computing system to perform petroleum systems modeling based at least in part on the undisturbed orientation parameter value.

**16.** The one or more computer-readable storage media of claim 14 further comprising computer-executable instructions to instruct a computing system to predict a fracture orientation of an artificial fracture based at least in part on the undisturbed orientation parameter value.

**Patentansprüche**

**1.** Computer-implementiertes Verfahren, Folgendes umfassend:

Bereitstellen von Fehlergeometriedaten und Bruchdaten für einen Bruch;

Schätzen von Größenordnungs- und Orientierungsparameterwerten ($\theta_H$ und $\sigma_H$) einer Fernfeldbelastung und eines theoretischen Orientierungsparameterwerts ($\theta_{theo}$), zumindest teilweise auf den Fehlergeometriedaten und den Bruchdaten basierend; und

Bestimmen eines ungestörten Orientierungsparameterwerts ($\theta_{und}$) für den Bruch, wobei das Bestimmen das Abziehen des theoretischen Orientierungsparameterwerts ($\theta_{theo}$) von einem beobachteten Orientierungsparameterwert ($\theta_{obs}$) umfasst, der wenigstens teilweise auf den Bruchdaten basiert.

2. Verfahren nach Anspruch 1, wobei die Bruchdaten Orientierungsdaten umfassen.

3. Verfahren nach Anspruch 1, wobei die Bruchdaten Spannungsbruchdaten umfassen.

4. Verfahren nach Anspruch 1, wobei die Bruchdaten Druckbruchdaten umfassen.

5. Verfahren nach Anspruch 1, wobei die Bruchdaten Scherungsbruchdaten umfassen.

6. Verfahren nach Anspruch 1, wobei das Schätzen das Schätzen der Größenordnung von $\sigma_H$ über eine Inversionstechnik umfasst.

7. Verfahren nach Anspruch 1, wobei das Schätzen das Schätzen von $\theta_H$ über eine Inversionstechnik umfasst.

8. Verfahren nach Anspruch 1, wobei das Schätzen das Schätzen der Größenordnungs- und Orientierungsparameterwerte über eine Inversionstechnik umfasst.

9. Verfahren nach Anspruch 1, wobei der theoretische Orientierungsparameterwert und der gemessene Orientierungsparameterwert Orientierungswinkel sind.

10. Verfahren nach Anspruch 9, wobei der ungestörte Orientierungsparameterwert einen ungestörten Orientierungswinkel umfasst.

11. Verfahren nach Anspruch 1, umfassend das Schätzen von Größenordnungs- und Orientierungsparameterwerten für mit verschiedenen Ereignissen verknüpfte Fernfeldbelastungen.

12. Verfahren nach Anspruch 11, wobei ein bestimmter ungestörter Orientierungsparameterwert mit einem der verschiedenen Ereignisse verknüpft wird.

13. System, umfassend:

einen Prozessor;

mit dem Prozessor wirkungsverbundenen Speicherplatz; und

ein oder mehrere Module, die in dem Speicherplatz gespeicherte, Prozessorausführbare Anweisungen umfassen, um das System dazu anzuweisen,

Fehlergeometriedaten und Bruchdaten für einen Bruch bereitzustellen;

Größenordnungs- und Orientierungsparameterwerte ($\theta_H$ und $\sigma_H$) einer Fernfeldbelastung und einen theoretischen Orientierungsparameterwert ($\theta_{theo}$) zu schätzen, wenigstens teilweise basierend auf der Fehlergeometrie und den Bruchdaten; und

einen ungestörten Parameterwert für einen Bruch zu bestimmen, wobei die Anweisungen zum Bestimmen Anweisungen umfassen, den theoretischen Orientierungsparameterwert ($\theta_{theo}$) von einem beobachteten Orientierungsparameterwert ($\theta_{obs}$) abzuziehen, der wenigstens teilweise auf den Bruchdaten basiert.

14. Ein oder mehrere computerlesbare Speichermedien, Computer-ausführbare Anweisungen umfassend, um das Computersystem dazu anzuweisen:

Fehlergeometriedaten und Bruchdaten für einen Bruch bereitzustellen;

Größenordnungs- und Orientierungsparameterwerte ($\theta_H$ und $\sigma_H$) einer Fernfeldbelastung und einen theoretischen Orientierungsparameterwert ($\theta_{theo}$) zu schätzen, wenigstens teilweise basierend auf der Fehlergeometrie und den Bruchdaten; und

einen ungestörten Parameterwert für einen Bruch zu bestimmen, wobei die Anweisungen zum Bestimmen Anweisungen umfassen, den theoretischen Orientierungsparameterwert ($\theta_{theo}$) von einem beobachteten Orientierungsparameterwert ($\theta_{obs}$) abzuziehen, der wenigstens teilweise auf den Bruchdaten basiert.

15. Ein oder mehrere Computer-lesbare Speichermedien nach Anspruch 14, ferner umfassend Computer-ausführbare Anweisungen, um ein Computersystem dazu anzuweisen, Petroleumsystemmodellierung durchzuführen, wenigstens teilweise basierend auf dem ungestörten Orientierungsparameterwert.

16. Ein oder mehrere Computer-lesbare Speichermedien nach Anspruch 14, ferner umfassend Computer-ausführbare Anweisungen, um ein Computersystem dazu anzuweisen, eine Bruchorientierung eines künstlichen Bruchs vorauszusagen, wenigstens teilweise basierend auf dem ungestörten Orientierungsparameterwert.

**Revendications**

1. Procédé mis en oeuvre par voie informatique comprenant :

la fourniture de données de géométrie de faille et des données de fracture pour une fracture ;
l'estimation des valeurs des paramètres d'amplitude et d'orientation ($\sigma_H$ et $\theta_H$) d'une contrainte de champ lointain et d'une valeur théorique du paramètre d'orientation ($\theta_{theo}$) sur la base, au moins en partie, des données de géométrie de faille et des données de fracture ; et
la détermination d'une valeur non perturbée du paramètre d'orientation ($\theta_{und}$) pour la fracture dans lequel la détermination comprend la soustraction de la valeur théorique du paramètre d'orientation ($\theta_{theo}$) d'une valeur observée du paramètre d'orientation ($\theta_{obs}$) qui est basée, au moins en partie, sur les données de fracture.

2. Procédé selon la revendication 1 dans lequel les données de fracture comprennent des données d'orientation.

3. Procédé selon la revendication 1 dans lequel les données de fracture comprennent des données de fracture de tension.

4. Procédé selon la revendication 1 dans lequel les données de fracture comprennent des données de fraction de compression.

5. Procédé selon la revendication 1 dans lequel les données de fracture comprennent des données de fracture de cisaillement.

6. Procédé selon la revendication 1 dans lequel l'estimation comprend l'estimation de l'amplitude de $\sigma_H$ par une technique d'inversion.

7. Procédé selon la revendication 1 dans lequel l'estimation comprend l'estimation de $\theta_H$ par une technique d'inversion.

8. Procédé selon la revendication 1 dans lequel l'estimation comprend l'estimation des valeurs des paramètres d'amplitude et d'orientation par une technique d'inversion.

9. Procédé selon la revendication 1 dans lequel la valeur théorique du paramètre d'orientation et la valeur mesurée du paramètre d'orientation sont des angles d'orientation.

10. Procédé selon la revendication 9 dans lequel la valeur non perturbée du paramètre d'orientation comprend un angle d'orientation non perturbé.

11. Procédé selon la revendication 1 comprenant l'estimation des valeurs des paramètres d'amplitude et d'orientation pour des contraintes de champ lointain associées à différents événements.

12. Procédé selon la revendication 11 associant une valeur déterminée non perturbée du paramètre d'orientation avec l'un des différents événements.

13. Système comprenant :

un processeur ;

une mémoire couplée de manière fonctionnelle au processeur ; et

un ou plusieurs modules qui comprennent des instructions pouvant être exécutées par un processeur stockées dans la mémoire pour demander au système de

fournir des données de géométrie de faille et des données de fracture pour une fracture ;

estimer des valeurs des paramètres d'amplitude et d'orientation ($\sigma_H$ et $\theta_H$) d'une contrainte de champ lointain et une valeur théorique du paramètre d'orientation ($\theta_{theo}$) sur la base, au moins en partie, des données de géométrie de faille et des données de fracture ; et

déterminer une valeur non perturbée de paramètre pour la fracture dans lequel les instructions à déterminer comprennent des instructions pour soustraire la valeur théorique du paramètre d'orientation ($\theta_{theo}$) d'une valeur observée du paramètre d'orientation ($\theta_{obs}$) qui est basée, au moins en partie, sur les données de fracture.

14. Un ou plusieurs supports de stockage lisibles par ordinateur comprenant des instructions pouvant être exécutées par un ordinateur pour demander à un système informatique de :

fournir des données de géométrie de faille et des données de fracture pour une fracture ;

estimer des valeurs des paramètres d'amplitude et d'orientation ($\sigma_H$ et $\theta_H$) d'une contrainte de champ lointain et une valeur théorique du paramètre d'orientation ($\theta_{theo}$) sur la base, au moins en partie, des données de géométrie de faille et des données de fracture ; et

déterminer une valeur non perturbée de paramètre pour la fracture dans lequel les instructions à déterminer comprennent des instructions pour soustraire la valeur théorique du paramètre d'orientation ($\theta_{theo}$) d'une valeur observée du paramètre d'orientation ($\theta_{obs}$) qui est basée, au moins en partie, sur les données de fracture.

15. Un ou plusieurs supports de stockage lisibles par ordinateur selon la revendication 14 comprenant en outre des instructions pouvant être exécutées par un ordinateur pour demander à un système informatique de réaliser une modélisation de systèmes pétroliers sur la base, au moins en partie, de la valeur non perturbée du paramètre d'orientation.

16. Un ou plusieurs supports de stockage lisibles par ordinateur selon la revendication 14 comprenant en outre des instructions pouvant être exécutées par un ordinateur pour demander au système informatique de prédire l'orientation de fracture d'une fracture artificielle sur la base, au moins en partie, de la valeur non perturbée du paramètre d'orientation.

System 100

Management Components 110

Framework 170

Fig. 1

Fig. 2

Fig. 3

Fig. 4

Method 500

514

Provide
Measured Fracture
Orientation $\theta_{obs}$

515

518

Provide
Interpreted Faults
Geometry F

519

522

Perform Stress Inversion Using F and $\theta_{obs}$
to Generate $\sigma_H$ and $\theta_H$

523

526

Perform Computation Using $\sigma_H$ and F
to Generate $\theta_{theo}$

527

530

Determine Undisturbed Measured Fracture
Strike Orientation Using:
$$\theta_{und} = \theta_H + (\theta_{obs} - \theta_{theo})$$

531

# Fig. 5

Environment 610

● Well

Intersection

Fault

Method 620

Provide
Fault Geometry Data and Fracture Data
624

625

Estimate
At Least One Parameter Value of a Far Field Stress (e.g., based on provided data)
628

629

Determine
At Least One Undisturbed Parameter Value (e.g., for at least one fracture)
632

633

# Fig. 6

Fig. 7

Fig. 8

System 910

Fig. 9

System Components 1000

Processor(s)
1002

Memory/Storage
1004

Bus 1008

I/O Device 1006

Network System 1010

Component(s)
1022-1

Component(s)
1022-2

Network
1020

Component(s)
1022-3

Component(s)
1022-N

Fig. 10

## REFERENCES CITED IN THE DESCRIPTION

**Patent documents cited in the description**

- US 20120072188 A1


**Non-patent literature cited in the description**

- **FRANTZ MAERTEN.** Geomechanics to solve geological structure issues: forward, inverse and restoration modeling. *Université Montpellier II Sciences et techniques du Languedoc,* 17 June 2010